# EUROPEAN PATENT APPLICATION

(11) **EP 4 664 191 A1**
(43) Date of publication of application: **17.12.2025**
(21) Application number: 23715565.0
(22) Date of filing: 06.02.2023
(51) Int. Cl.: G02C 5/22, G02C 5/14

(54) **SYSTEM FOR FIXING EYEGLASSES TEMPLES TO THE RIMS**

(71) Applicant: Edit Your Life SL, 08018 Barcelona (ES)
(72) Inventor: ABRIL EGEA, ALEX, 08018 Barcelona (ES)
(74) Representative: Manresa Medina, José Manuel
(86) International application number: PCT/ES2023/070064
(87) International publication number: WO 2024/165769

(57) **Abstract**

It comprises rims (1) to which two fixed blades (2) are fixed, one at each end, by means of screws (3), defining a first through hole (4), **characterized** in that it comprises: two movable blades (5), one per fixed blade (2), comprising a second through hole (6), a main body (7) with a first magnet (8) inside, a first cavity (9) and a second cavity (10), the first through hole (4) and the second through hole (6) being joined by a pin (16) that is located in a passage defined by both through holes (4, 6), and two temples (11), one for each fixed blade (2), comprising at one of its ends a mechanical retention assembly (12), comprising a hollow casing (20), a compression spring (21) that is housed inside and a sphere (22) located next to the compression spring (21) and partially outside the casing (20), said sphere facing the first magnet (8), a centering element (13) with a second magnet inside (14) attracted by the first magnet (8), which fits into the first cavity (9) and a blocking element (15) in a direction parallel to the temple (11) which fits into the second cavity (10).

## Description

System for fixing eyeglasses temples to the rims, of the type that comprises rims to which two fixed blades are fixed, one at each end, by means of screws, defining a first through hole, characterized in that it comprises: - two movable blades, one per fixed blade, comprising a second through hole, - a main body with a first magnet inside, a first cavity and a second cavity, the first through hole and the second through hole being joined by a pin that is located in a passage defined by both through holes, and - two temples, one for each fixed blade, comprising at one of its ends a mechanical retention assembly, comprising a hollow casing, a compression spring that is housed inside and a sphere located next to the compression spring and partially outside the casing, said sphere facing the first magnet, a centering element with a second magnet inside attracted by the first magnet, which fits into the first cavity and a blocking element in a direction parallel to the temple which fits into the second cavity.

### BACKGROUND OF THE INVENTION

Different systems are known in the state of the art.

Different systems for fixing eyeglasses temples are known in the state of the art.

Thus, Patent US2009/0195747 "INTERCHANGEABLE EYEGLASS TEMPLE", from 2008, in the name of Mrs. Luisa M. INSUA, which refers to Temple holders each having recesses formed in the holders are hinged to the extreme ends of an eyeglass front. Temple ends comprise some magnets, inserted into respective holder recesses. Magnets within the recesses and magnets of the temple ends have polar orientations that establish magnetic attraction with each other and join the temples to the front through the temple holders.

The French Patent 3056307 "SYSTEME DE BRANCHES INTERCHANGEABLES POUR MONTURES DE LUNETTES" of the year 2016, in the name of ELLAPS CPL, is also known, which refers to a device for fixing a temple of eyeglasses by axial magnetization by means of two magnets, one located in the body of the temple and the other at the level of the hinge. A square sleeve is made in the branch for the passage of the magnet of the hinge block as well as a blind hole to receive the cylindrical magnet. The purpose of machining the square part is to keep the branch and the hinge block in line.

There are eyeglasses marketed as MYLV that include a fixing system such as that described in the aforementioned French patent.

Finally, the inventor is also the inventor of the Spanish Utility Model No. 202032016 (ES1257352) "SYSTEM OF FIXING TEMPLES OF EYEGLASSES TO THE RIMS", of the year 2020, which refers to a system for fixing eyeglasses temples to the rims, of the type that comprises a rims, with two ends, one for each ear, comprising a first frontal magnet, which is attached to the rims by means of joints, and temples with a hole as a housing in which inside, at the bottom, there is a second magnet with a different polarity to that of the first magnet, characterized in that the ends have guides on the outside and the temples have guide elements for said guides, the guide elements located in the housing, and when the ends are inserted into the temples, the guides fit into the guide elements where they slide until the magnets mutually attract each other and fix the temple to the end, leaving the end located in its final position. in the housing, fixed by the magnets and by the guides and the guiding elements.

### BRIEF DESCRIPTION OF THE INVENTION

The present invention refers to the field of systems that fix the temples to the rims of the eyeglasses using magnets, thus the temples are interchangeable.

The closest prior art is the Spanish Utility Model No. 202032016 (ES1257352).

Said Utility Model solves the problem of the failures in the magnets, thereby losing their magnetic properties. This can cause that the temple separates from the articulated end, and can cause the rim to fall with the consequent economic cost of the repair of the rims, by means of some guide elements inside the hole of the temple, as a profile-guide, where some existing guides are supported at the end of the rims, in this way, it is difficult to exit from the interior of the hole at said end of the rim.

On the other hand, it has the drawback that in certain situations, it cannot prevent the separation of the temples from the rims, for example, when taking off a helmet or taking off a sweater.

The present invention solves the problem by means of a system for joining the temples in the rims that is based on three fixing points, the first by a first magnet, the second with a mechanical retention set, formed by a casing containing a movable sphere and a compression spring, and a third by means of positioning elements (centering elements) that are connected to fixed blades that are fixed to the rims, this also includes a second magnet inside to retain it with more power. These three points prevent the accidental separation of the rims and temples.

It is an object of the present invention a system for fixing eyeglasses temples to the rims, of the type that comprises rims to which two fixed blades are fixed, one at each end, by means of screws, defining a first through hole, characterized in that it comprises: - two movable blades, one per fixed blade, comprising a second through hole, - a main body with a first magnet inside, a first cavity and a second cavity, the first through hole and the second through hole being joined by a pin that is located in a passage defined by both through holes, and - two temples, one for each fixed blade, comprising at one of its ends a mechanical retention assembly, comprising a hollow casing, a compression spring that is housed inside and a sphere located next to the compression spring and partially outside the casing, said sphere facing the first magnet, a centering element with a second magnet inside attracted by the first magnet, which fits into the first cavity and a blocking element in a direction parallel to the temple which fits into the second cavity.

### BRIEF DESCRIPTION OF THE DRAWINGS

In order to facilitate the explanation, four sheets of drawings are attached to this description in which a practical case of realization has been represented, which is cited by way of example, not limiting the scope of the present invention:
- Figure 1 is a general view of the eyeglasses object of the present invention,
- Figure 2 is a sectional view on the line II-II of Figure 1,
- Figure 3 is a front perspective view of the joint, with the main body and the fixed blade,
- Figure 4 is a side perspective view of the main body, and
- Figure 5 is a partial bottom view of the temple.

### PRACTICAL EMBODIMENT OF THE PRESENT INVENTION

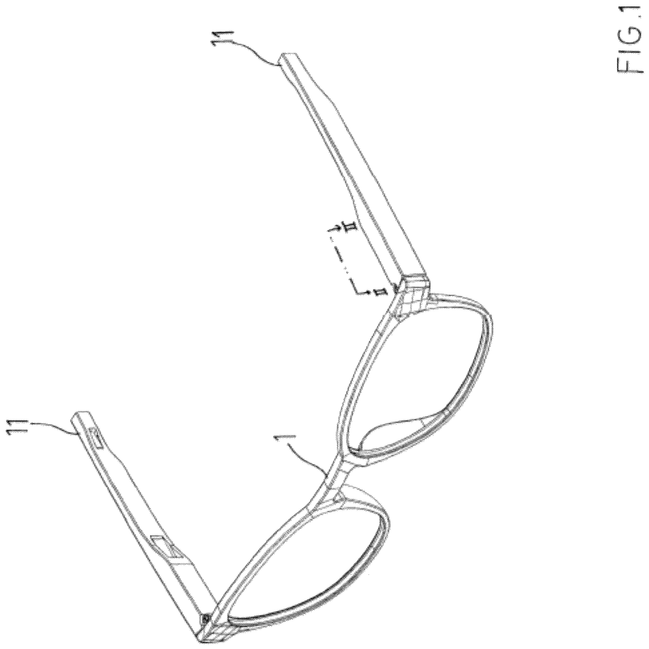

Thus, in figure 1 it is illustrated rims 1 with temples 11.

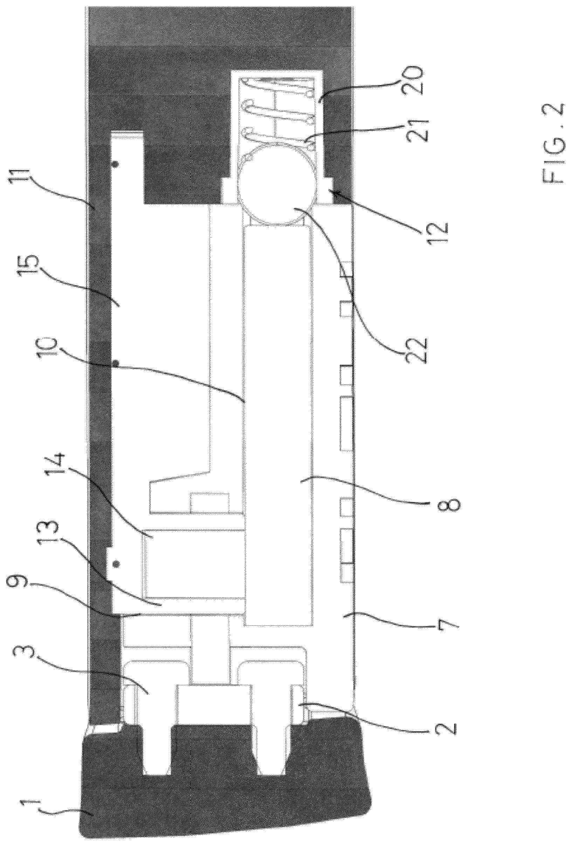

Figure 2 shows the rims 1, a fixed blade 2, some screws 3, a main body 7, a first magnet 8, a first cavity 9, a second cavity 10, the temples 11, a mechanical retention assembly 12 with a casing 20, a compression spring 21 and a ball 21, a centering element 13 with a second magnet 14, and a locking element 15.

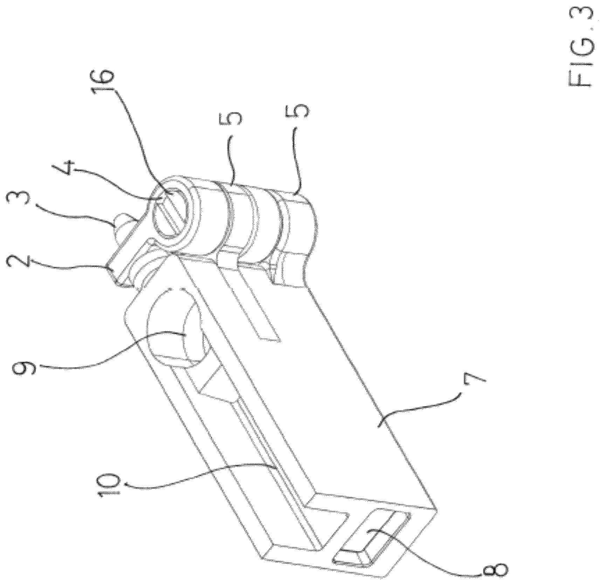

Figure 3 shows the fixed blade 2, the screws 3, a first through hole 4, some movable blades 5, the main body 7, the first magnet 8, the first cavity 9, the second cavity 10 and a pin 16.

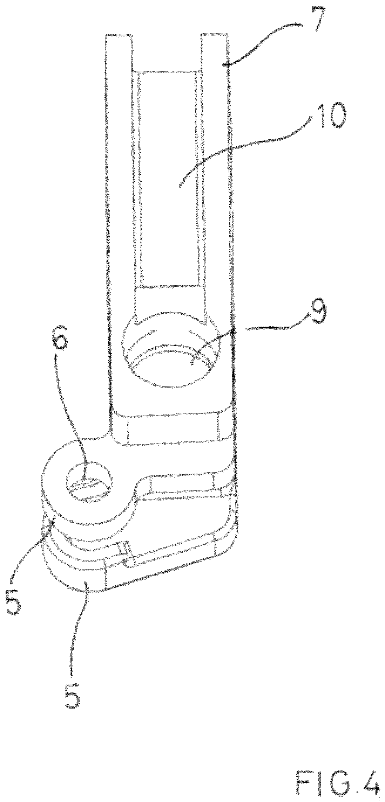

Figure 4 refers to the movable blade 5, a second through hole 6, the main body 7, the first cavity 9 and the second cavity 10.

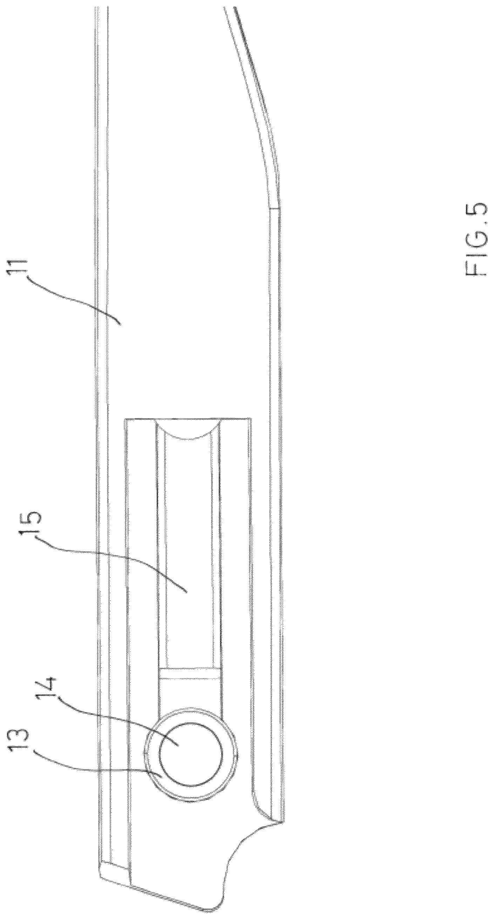

Finally, figure 5 shows the temples 11, the centering element 13, the second magnet 14 and the blocking element 15.

Thus, the system of the present invention for fixing eyeglasses temples to the rims comprises rims 1 to which two fixed blades 2 are fixed, one at each end, by means of screws 3, defining a first through hole 4.

It is characterized in that it comprises two movable blades 5, one for each fixed blade 2, which comprise a second through hole 6.

It also comprises a main body 7 with a magnet 8 inside, a first cavity 9 and a second cavity 10, the first through hole 4 and the second through hole 6 being joined by a pin 16 that is located in a passage defined by both through holes 4,6.

It also comprises two temples 11, one for each fixed blade 2, comprising at one of its ends a mechanical retention system 12, comprising a hollow casing 20, a compression spring 21 that is housed inside it, and a movable sphere 22, made of ferromagnetic material, located after the compression spring 21 and partially outside the casing 20, said sphere 22 facing the first magnet 8 that attracts the sphere 22.

It also comprises a centering element 13 that fits into the first cavity 9, thus ensuring the correct placement of the tab 7, and a blocking element 15 in a direction parallel to the temple 11 that fits into the second cavity 10.

This system described in the previous paragraph allows the temple to be locked on the main body 7 by three points:
A first point refers to the mechanical retention assembly 12, in which a hollow casing 20 includes a compression spring 21 inside and then there is a sphere 22, which is partially located inside the casing 20.

A second point refers to the centering element 13 which, as being located in the first cavity 9 next to the union by magnetism with the first magnet 8, allows a superior locking.

And finally, the third point is linked to the blocking element 15 that is attached to the first magnet 8 and also blocks movement in a direction parallel to the axis of the temple.

One manufacturing option is for the centering element 13 and/or the blocking element 15 are manufactured of a ferromagnetic material and thus can be attracted by the first magnet 8.

Optionally, as shown in figures 2, 3 and 4 the first cavity 9 and the second cavity 10 are connected. Constructively it facilitates its manufacture.

It could also be configured that the centering element 13 and the blocking element 15 are made in one piece, in this way, with the same mould the two elements would be produced.

Finally, the centering element 13 is a cylinder, thus facilitating the work of fitting and fixing without stress due to the edges.

Optionally, the first magnet 8 comprises a metal core inside to give the first magnet 8 greater rigidity.

In a concrete embodiment, the user who wishes to install temples 11 on the rims would do it as follows.

It would face the temple 11 at the top with the main body 7, so that the centering element 13 faces the first cavity 9 and the blocking element 15 faces the second cavity 10.

By introducing two elements 13,15 in the two cavities 9,10, the first magnet 8 attracts them, due to the ferromagnetic properties of the elements 13,15, and fixes them.

In parallel, the mechanical retention assembly 12 is connected to the first magnet 8 by means of the sphere 22, which, on the one hand, said first magnet 8 pushes the sphere 22 against the compression spring 21, which causes it to produce a push of the sphere 22 against the first magnet 8, blocking the temple 11.

It would be done in the same way with the other temple and the temples 11 would be then installed in the rims 1.

When removing the motorcycle helmet with the eyeglasses on, the temples 11 would not separate from the rims 1, because the temple 11 is blocked by three points, as previously indicated, and prevents the elements 13,15 from accidentally being come out of the interior of the cavities 9,10 and the first magnet 8 separates from the mechanical retention assembly 12.

The present invention describes a new system for fixing eyeglasses temples to the rims. The examples mentioned here are not limiting of the present invention, therefore it may have different applications and/or adaptations, all of them within the scope of the following claims.

## Claims

1. A system for fixing eyeglasses temples to the rims, of the type that comprises rims (1) to which two fixed blades (2) are fixed, one at each end, by means of screws (3), defining a first through hole (4), **characterized in that** it comprises:
- two movable blades (5), one per fixed blade (2), comprising a second through hole (6),
- a main body (7) with a first magnet (8) inside, a first cavity (9) and a second cavity (10), the first through hole (4) and the second through hole (6) being joined by a pin (16) that is located in a passage defined by both through holes (4, 6), and
- two temples (11), one for each fixed blade (2), comprising at one of its ends a mechanical retention assembly (12), comprising a hollow casing (20), a compression spring (21) that is housed inside and a sphere (22) located next to the compression spring (21) and partially outside the casing (20), said sphere facing the first magnet (8), a centering element (13) with a second magnet inside (14) attracted by the first magnet (8), which fits into the first cavity (9) and a blocking element (15) in a direction parallel to the temple (11) which fits into the second cavity (10).

2. A system according to claim 1, **characterized in that** the centering element (13) and/or the blocking element (15) are made of a ferromagnetic material and are attracted by the first magnet (8).

3. A system according to claim 1, **characterized in that** the first cavity (9) and the second cavity (10) are connected.

4. A system according to claim 2, **characterized in that** the centering element (13) and the blocking element (15) are made in one piece.

5. A system according to claim 4, **characterized in that** the centering element (13) is a cylinder.

6. A system according to claim 1, **characterized in that** the first magnet (8) comprises a metal core inside.

## Amended claims

### Amended claims under Art. 19.1 PCT

1. A system for fixing eyeglasses temples to the rims, of the type that comprises rims (1) to which two fixed blades (2) are fixed, one at each end, by means of screws (3), defining a first through hole (4), **characterized in that** it comprises:
- two movable blades (5), one per fixed blade (2), comprising a second through hole (6),
- a main body (7) with a first magnet (8) inside, a first cavity (9) and a second cavity (10), the first through hole (4) and the second through hole (6) of the main body (7) being joined by a pin (16) that is located in a passage defined by both through holes (4, 6), and
- two temples (11), one for each fixed blade (2), comprising at one of its ends a mechanical retention assembly (12), comprising a hollow casing (20), a compression spring (21) that is housed inside and a sphere (22) located next to the compression spring (21) and partially outside the casing (20), said sphere facing the first magnet (8), a centering element (13) with a second magnet inside (14) attracted by the first magnet (8), which fits into the first cavity (9) and a blocking element (15) in a direction parallel to the temple (11) which fits into the second cavity (10), such that the temples (11) are locked into the main body (7) by three points.

2. A system according to claim 1, **characterized in that** the centering element (13) and/or the blocking element (15) are made of a ferromagnetic material and are attracted by the first magnet (8).

3. A system according to claim 1, **characterized in that** the first cavity (9) and the second cavity (10) are connected.

4. A system according to claim 2, **characterized in that** the centering element (13) and the blocking element (15) are made in one piece.

5. A system according to claim 4, **characterized in that** the centering element (13) is a cylinder.

6. A system according to claim 1, **characterized in that** the first magnet (8) comprises a metal core inside.
